Europäisches Patentamt

European Patent Office

Office européen des brevets

(19)

(11) Veröffentlichungsnummer: **0 422 342 B1**

# (12) EUROPÄISCHE PATENTSCHRIFT

(45) Veröffentlichungstag der Patentschrift: **14.12.94**

(51) Int. Cl.⁵: **F16K 41/02**, F16J 15/18

(21) Anmeldenummer: **90114218.2**

(22) Anmeldetag: **25.07.90**

(54) **Abdichtungssystem mit modifizierter Stopfbuchse.**

(30) Priorität: **29.09.89 DE 3932599**

(43) Veröffentlichungstag der Anmeldung:
**17.04.91 Patentblatt 91/16**

(45) Bekanntmachung des Hinweises auf die
Patenterteilung:
**14.12.94 Patentblatt 94/50**

(84) Benannte Vertragsstaaten:
**AT BE CH DE DK ES FR GB IT LI NL SE**

(56) Entgegenhaltungen:
**EP-A- 0 308 390
DE-A- 3 012 024
DE-A- 3 540 478
FR-A- 2 260 048**

**MORDEN: "Seals and Sealing Handbook",
Ausgabe 2, 1986, Seiten 100-103, Tradeand
Technical Press Ltd**

**MORDEN: "Seals and Sealing Handbook",
Ausgabe 2, 1986, Seiten 117-119, Tradeand
Technical Press Ltd**

(73) Patentinhaber: **RUHR OEL GmbH
Alexander-von-Humboldt-Strasse
D-45896 Gelsenkirchen (DE)**

(72) Erfinder: **Plettenberg, Klaus
Habichtstrasse 21
D-4270 Dorsten (DE)**
Erfinder: **Straub, Reinhold
Kiebeck 31
D-4270 Dorsten (DE)**
Erfinder: **Bohlander, Friedhelm
Schmelzberg 3 a
D-4235 Schermbeck-Galen (DE)**

(74) Vertreter: **Lindner, Wolfgang, Dr.
Alexander-von-Humboldt-Strasse
D-45896 Gelsenkirchen (DE)**

## Beschreibung

Die Erfindung betrifft ein Abdichtungssystem mit Stopfbuchse bei Regel- oder Absperrarmaturen, bestehend aus

- einem Ventilgehäuse (3) mit Stopfbuchsraum,
- einer geteilten Packung mit Einzelpackungsringen aus einem Basisdichtungsmaterial und jeweils einem unteren und oberen Kammerungsring für jeden der beiden Packungsteile,
- einer mit dem Ventilgehäuse (3) verschraubten Stopfbuchsbrille (2),
- einer zwischen den beiden Packungsteilen im Stopfbuchsraum angeordneten Schmierbuchse (13), über die eine kontinuierliche Gleitmittelzuführung erfolgt, sowie
- einer axial- oder auch drehbeweglichen Spindel (1) bzw. Welle.

Ein solches Abdichtungssystem ist z.B. aus der EP-A-0308390 bekannt.

Desweiteren betrifft die Erfindung die zugehörigen Packungsringe gemäß diesem Abdichtungssystem.

Stopfbuchsendichtungen (Packungen) sind Dichtelemente, die gegeneinander bewegte Zylinderflächen gegen Flüssigkeiten und Gase abdichten (vgl. Dubbel, Taschenbuch für den Maschinenbau, 16. Auflage, G 161). Die gesamte Stopfbuchsendichtung besteht aus dem feststehenden Teil des Gehäuses mit Stopfbuchsraum, dem Dichtmaterial als eigentlicher Packung, der mit dem Gehäuse verschraubten Brille (Glansch oder Gewinde; nachspannbar), der ggf. für Schmierölverteilung vorgesehenen Zwischenlaterne sowie der rotierend oder axial beweglichen Welle oder Spindel.

Packungen sind nach den Angaben der vorgenannten Literaturstelle verwendbar für relativ geringe Gleitgeschwindigkeiten (bis etwa 0,3 m/s), hohe Temperaturen (bis etwa 520 °C), hohe Drücke (bis etwa 300 bar) und Wellendurchmesser von 10 bis 200 mm. Für den Außendurchmesser der Packung sind Abmessungen von etwa 18 bis 240 mm (bis 800 mm für Dehnungskompensatoren in Gasleitungen) üblich, wobei das Dichtungsprinzip darauf beruht, daß eine Verschraubung in axialer Richtung eine Querverformung und Anpressen an die zylindrische Dichtflächen bewirkt. Ein Ventil mit Stopfbuchsendichtung für hohe Arbeitsdrücke und hohe Arbeitstemperaturen ist beispielsweise in der DE-A-35 40 478 beschrieben worden.

Als Packungsringe sind solche aus Flockengraphit, mit Bindemittel gepreßt, für die Anwendung bei Kreiselpumpen und Ventilspindeln in der chemischen Industrie gebräuchlich. Wegen Verhärtung des Bindemittels soll der Einsatz der Graphit-Packungsringe zurückgehen (vgl. Dubbel, a.a.O.).

Nach einem betriebsinternen Stand der Technik wurden Spindeln von Regel- und Absperrarmaturen bisher auch mit handelsüblichen, asbesthaltigen Packungsmaterialien verpackt. Diese Verpackungsart führte zu vergleichsweise kurzen Standzeiten der eingesetzten Armaturen, zu großen Leckagen und Umweltbelastungen, Beschädigungen der Spindeln und Armaturenteile und zu Betriebsstörungen sowie Produktionsausfällen.

Bei derartigen Abdichtungssytemen ist meist nach ca. 5000 Betätigungen eine Wartung durch Nachspannen erforderlich (vgl. auch Chem.-Ing.-Tech. 49 (1977) Nr. 2, S. 89-95).

Im übrigen ist ein Bemühen des Gesetzgebers zu erkennen, über Regelungswerke und Verwaltungsvorschriften, beispielsweise die "Technische Anleitung zur Reinhaltung der Luft" (TA Luft) den maximal zulässigen Emissionsmassenstrom (vgl. § 48 BImSchG) auch bei Abdichtungssystemen an Armaturen wie sie in der chemischen Industrie oder der Mineralölindustrie in Gebrauch sind, an den für Faltenbalgarmaturen erreichbaren günstigeren Werten zu orientieren.

Aufgabe der Erfindung ist daher die Verbesserung von Spindelabdichtungen an Armaturen für technisch hohe Anforderungen bei langzeitig geringen Leckagen unter Einhaltung vorgegebener Emissions-Grenzwerte.

Der Lösung dieser Aufgabe dient ein Abdichtungssystem mit modifizierter Stopfbuchse der eingangs angegebenen Art, bei welchem die folgenden weiteren Merkmale verwirklicht sind:

a) für die Herstellung der Packung finden Folien aus flexiblem Graphit als Halbzeug Verwendung,

b) in die Packung ist vor dem Einbau in die Armatur ein pastöses Gleitmittel eingelagert worden und

c) die Packungsverdichtung und -nachstellung erfolgt durch Federkraft.

Eine vorteilhafte Ausgestaltung des Abdichtungssystems ist mit der Packungsverdichtung und laufenden Nachstellung der Packung mittels zentrisch angeordneter und axial wirkender Tellerfedernpakete gegeben. Derartige Tellerfedern haben gegenüber zylindrischen Schraubendruckfedern den Vorteil, daß eine hohe Federkraft bei vergleichsweise geringer Bauhöhe zur Einwirkung kommen kann. Die Krafteinleitung auf die Stopfbuchspackung erfolgt über angepaßte Federteller und die Stopfbuchsbrille, wobei sich das andere Ende der Druckfedern ebenfalls über angepaßte Federteller gegen Schraubmuttern von im Ventilgehäuse befestigten Gewindebolzen unter Zugbeanspruchung der Gewindebolzen abstützt.

Für die Herstellung der Stopfbuchspackungen finden Folien aus flexiblem Graphit als Halbzeug Verwendung.

Als Ausgangsmaterial für die Packung wird zweckmäßig ein expandiertes Reingraphit, das als handelsübliches Bandmaterial verschiedener Breiten zur Verfügung steht, eingesetzt. Die für die Herstellung des Bandmaterials dienende Graphitfolie wird aus Naturgraphit über Graphitsalz als Zwischenstufe zu einem Expandat modifiziert, welches dann beispielsweise zu einer geriffelten Graphitfolie verarbeitet werden kann, aus welcher das Bandmaterial mit einer bestimmten, herstellerspezifischen Querprofilierung hergestellt wird. Durch die Querprofilierung wird eine gute Elastizität der Packung erreicht, gleichzeitig wird die Funktionsfähigkeit der mit inkorporiertem Gleitmittel für den Einbau in die Armatur vorgesehenen Packung dadurch unterstützt, daß längs der Querprofilierung mit dem Gleitmittel gefüllte Taschen gebildet werden, die an der Spindel anliegen.

Als Gleitmittel finden mit Vorteil Verwendung Spezialfette, beispielsweise mit einer Zusammensetzung auf Basis Graphit, auf Basis von Bor, Stickstoff und Polytetrafluorethylen (PTFE) mit einem Feststoffanteil von etwa 30 Gew.-%, auf Bentonebasis mit mikrofeinen Kupfer- und Bleipartikeln oder auf Basis von Silikaten mit fluoriertem Polyetheröl und PTFE als weiteren Bestandteilen.

Derartige Gleitmittel dienen allgemein der Schmierung und Abdichtung von Armaturen und Maschinenelementen in Gegenwart strömender, aggressiver Medien in Gebrauchstemperaturbereichen bis zu etwa 280 °C. Das Gleitmittel auf Basis von fluoriertem Polyetheröl, PTFE und Silikaten kann bei der Abdichtung von Armaturen eingesetzt werden, wo es auf Sauerstoffbeständigkeit ankommt.

Es wurde in zahlreichen Versuchsreihen bestätigt, daß eine im Sinne der Erfindungsaufgabe wirksame Packung nur hergestellt und eingesetzt werden kann, wenn sowohl bei den axial beweglichen aber auch bei den drehenden Spindeln bzw. Wellen die Haft- und die Gleitreibung an der schon mit Gleitmittel versehenen Packungs-Innenseite weiter herabgesetzt wird. Diese Reibungsminimierung wird durch eine zusätzliche Gleitmittelzuführung im Bereich der geteilten Ausführung der Packung über die Schmierbuchse sichergestellt.

Zur Erzielung optimaler betrieblicher Standzeiten und minimaler Leckagen sind selbstverständliche Voraussetzungen bzw. Vorbedingungen bei der Packungsherstellung eine hervorragende Oberflächengüte der verwendeten Bauteile und eine hohe Maßhaltigkeit des Packraumes. Bei den Spindeln sind Oberflächengüten mit einer Rauhtiefe von $R_t \leq 2$ μm zweckmäßig. Auch bei der Nacharbeitung von Spindeloberflächen bei Instandsetzungsmaterialien sind diese Qualitäten anzustreben. Der Packungsraum sollte eine Oberflächengüte von $R_t \leq 15$ μm haben. Die packungsumschließenden Bauteile wie Spindel, Grundscheibe und Stopfbuchse müssen im Rahmen der zulässigen Toleranzen zylindrisch und planparallel gefertigt sein.

Bei der Herstellung der erfindungsgemäßen Packungen haben sich durch Berechnungen, Versuche und Erprobungen Abhängigkeiten zwischen der Packungsbreite (B) und dazu angepaßten optimierten Werten des Spindeldurchmessers ($d_1$) und der gesamten Packungslänge (L) ergeben.

Die nachfolgenden Erfahrungswerte geben eine Übersicht über vorzugsweise einzuhaltende Werte der Packungslänge in Abhängigkeit vom Spindeldurchmesser sowie Spezifikationen für die zulässigen Werte von Arbeitstemperatur und Arbeitsdruck.

Spindel-Durchmesser
$d_1$ = 4 bis 70 (mm)
Packungsraum-Durchmesser
$d_2$ = konstruktiv (mm)
Packungs-Länge
L = 1,5 x $d_1$ bis 0,9 x $d_1$ (mm)
Anz. der Packungsringe
n = 2 bis 7
Höhe des Packungsringes
$H = \frac{L}{n} \triangleq (1,0 \text{ bis } 1,2) B$
Breite des Packungsringes
B = konstruktiv nach $d_1$ und $d_2$
Bandbreite d. Rohmat.
b = 10 bis 25 (mm)
Arbeitsdruck
$p_A \leq 325$ (bar)
Arbeitstemperatur
$t_A \leq 450$ °C
Temp.a.d.Packung
t $\leq 300$ °C
$\leq 200$ °C (Sauerstoff)

Eine geteilte, aus mehreren Packungsringen mit der Höhe (H) und der Gesamtlänge (L) bestehende Packung kann in einem einfachen Preßwerkzeug unter Verwendung beispielsweise von expandiertem Reingraphit-Bandmaterial mit Querprofilierung hergestellt werden.

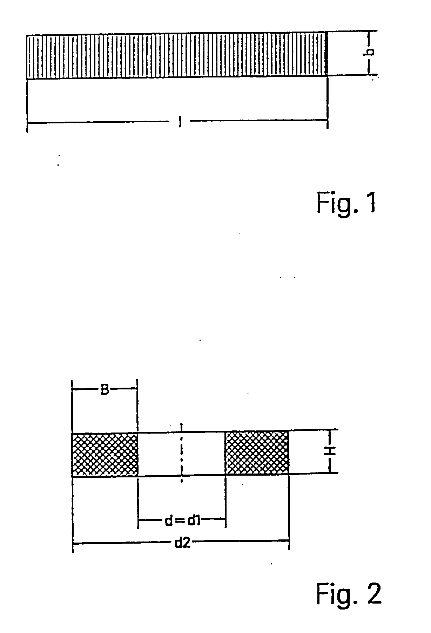

Entsprechend dem Spindeldurchmesser ($d_1$) wird Bandmaterial (vgl. Figur 1) mit einer Gleitmittelmenge beschichtet, die ausreicht um den Anteil des Gleitmittels im fertigen Zustand des Packungsringes (Figur 2) mit etwa 5 bis 10 Gewichtsprozent vorzusehen.

Das so vorbereitete Packungsmaterial kann um einen maßhaltigen Dorn eines Preßwerkzeuges gewickelt, mit diesem Dorn in das Preßwerkzeug eingeführt und in der hydraulischen Presse druckabhängig verpreßt werden. Die Höhe des Preßdruckes ist von der Packungsgröße und vom vorgesehenen Betriebsdruck der Armatur, in der die Packung Verwendung finden soll, abhängig. Die im Preßwerkzeug erreichte Vorverdichtung des Packungsringes soll im allgemeinen einen Wert ρ von etwa 1,3 g/cm³ nicht überschreiten. Bei einer solchen Verdichtung wird sichergestellt, daß beispielsweise ein Packungsring aus Reingraphit eine gute Elastizität behält.

Nach Einbringen des Packungsringes in den Packungsraum und Verschrauben der gesamten Packung mittels der Stopfbuchsbrille, die federbelastet ausgeführt ist, erfolgt die endgültige Verdichtung der einzelnen Packungsringe im Packungsraum. Die dabei bewirkte zusätzliche Verdichtung wird im allgemeinen ausreichen, um die restlichen Maßtoleranzen auszugleichen und eine gute Dichtwirkung im Sinne der Erfindungsaufgabe der Packung zu erreichen.

Die Standzeit der eingebauten Packung wird durch eine geeignete Kammerung der Packung verlängert. Dadurch wird das eingebrachte Gleitmittel langsamer herausgetragen und auf der Spindel bleibt ein zusammenhängender Schmierstofffilm erhalten. Durch die Kammerung wird, trotz hoher Anpreßkraft und häufiger axialer Betätigungen an der Ventilspindel die Extrudierung des Packungsmaterials weitgehend verhindert. Die Kammerung der Packung erfolgt an der Unterseite und auf der Oberseite der Packung mittels an der Spindel engstmöglich anliegender etwa 2 mm dicker Ringe. Diese Ringe können beispielsweise aus It-Dichtungsmaterial, einer Mischung aus ca. 8 bis 15 Gew.-% Gummi, 70 bis 80 Gew.-% Asbest sowie 5 bis 15 Gew.-% Zusatzstoffen für hohe zulässige Flächenpressungen aber auch asbestfreien Materialien wie hochverdichteten Reingraphitscheiben oder anderen Materialien bestehen.

Durch eine geeignet ausgelegte, stabile Grundscheibe wird eine gute Auflage der Packung im Packungsraum sichergestellt. Die Packung mit geteilter Packungslänge wird so aufgebaut, daß die Grundscheibe, ein unterer Kammerungsring, die unteren Packungsringe für den unteren Packungsraum, sowie ein Kammerungsring nacheinander in den Packungsraum eingebracht und durch ein geeignetes Werkzeug leicht angeschlagen werden. Anschließend erfolgt die Anordnung der Schmierbuchse im Packungsraum, wobei zweckmäßig höchstens etwa 1/3 der gesamten Packungslänge im unteren Packungsraum und mindestens etwa 2/3 der Packungslänge oberhalb der Buchse angeordnet werden. Schließlich folgen auf die Schmierbuchse ein weiterer Kammerungsring, die Packungsringe sowie der obere Kammerungsring. Nach Einbringung der Schmierbuchse werden wieder ein unterer Kammerungsring, die Packungsringe sowie ein oberer Kammerungsring eingebracht und wie beschrieben ebenfalls leicht angeschlagen. Die Packung wird danach mittels der durch Gewindebolzen und Schraubenmuttern einstellbaren über die Stopfbuchsbrille wirkenden Federkraft nur soweit zusätzlich verdichtet, bis der Packungsraum blasendicht ist und die federnde und elastische Wirkung der Packungsringe möglichst weitreichend erhalten geblieben ist. Die Blasendichtheit wird durch Anwendung eines schäumenden Mittels, das im Falle von Undichtigkeiten aufgrund eines Druckgradienten Gas austreten läßt, das zur Blasenbildung Anlaß gibt, geprüft.

Sind die Packungsräume, was beispielsweise bei älteren Armaturentypen der Fall sein kann, zu lang, so können für den Packungsaufbau zwischen Packung und Stopfbuchsbrille geeignete Distanzbuchsen eingesetzt werden. Auch können die einzelnen Packungsringe zu einer vorgefertigten Baueinheit bereits außerhalb des Packungsraumes zusammengefügt werden, d.h. statt Einzelpackungsringen kann eine Packungshülse eingesetzt werden, ggf. auch mit integralem Kammerungsring. Der Vorteil dieser Maßnahme liegt darin, daß ein stabiles Bauelement für die Verpackung von Spindeln eingesetzt werden kann.

Durch zusätzliche Anordnung von Kontroll- und Spülstutzen im Bereich des unteren und des oberen Stopfbuchsenteils kann mittels Differenzdruckmessung während des Betriebs geprüft werden, inwieweit der untere Stopfbuchsteil noch Dichtfunktion aufweist.

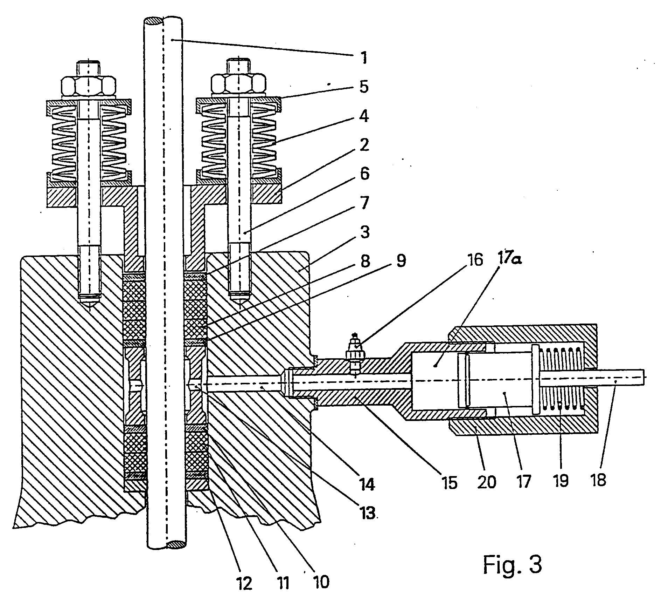

Eine erfindungsgemäße Stopfbuchsenausführung bestehend aus einer mit einem Gleitmittel, wie beschrieben, hergestellten Reingraphitpackung, in einer typischen geteilten Anordnung der Kammerungs- und der Packungsringe, die über Federn vorgespannt ist, mit einer permanenten Gleitmittelversorgung, die gegen den Überdruck im Ventilkörper eine kontinuierliche Zufuhr von Gleitmittel zur Führung der Spindel in der Stopfbuchse gewährleistet, ist in der Figur 3 dargestellt.

Die in der Figur 3 verwendeten Bezugszeichen haben die folgende Bedeutung:
- Spindel 1
- Stopfbuchsbrille 2
- Ventilgehäuse 3
- Tellerfederpaket 4
- Federteller 5
- Gewindebolzen 6
- Kammerungsringe 7, 9, 10, 12
- Packungsringe 8, 11
- Schmierbuchse 13
- Durchgangsbohrung 14
- Zuführstutzen 15
- Druckschmierkopf 16
- Zylinderraum für Gleitmittel 17 a
- Zylinderkolben 17
- Führungsstange 18
- Schraubendruckfeder 19
- Zylinderkopf 20

Eine besondere Ausführungsart der Erfindung betrifft eine automatische Gleitmittelzuführung.

Bei Untersuchungen der Langzeitdichtheit des erfindungsgemäßen Abdichtungssystsems mit federelastischer Stopfbuchsenpressung und permanenter Gleitmittelzugabe im Stopfbuchsenbereich wurde festgestellt, daß eine Dichtheit der Stopfbuchsenabdichtung von 1,3 . $10^{-6}$ mbar . 1 . $s^{-1}$ bis zum Ende des Versuchsprogramms bei 60 000 Betätigungen zwischen 0 und 100 % Hub unter Nenndruckbedingungen (He - $N_2$-Lecktestverfahren) erhalten werden konnte.

Bei ausreichender Gleitmittelzugabe zeigte die Armatur bis zu hohen Betätigungszahlen an der Ventilspindel einen erheblich geringeren Emissionsmassenstrom als bei der Anwendung der TA Luft auf Faltenbalgarmaturen mit einer Flanschdichtung maximal zulässig ist.

Damit hat sich das erfindungsgemäße Abdichtungssystem an Spindeln für Armaturen als zumindest gleichwertig zu der in der TA Luft geforderten Abdichtung mit Faltenbälgen erwiesen, wodurch erhebliche Kosteneinsparungen und ein bisher nicht erreichter Standard der Langzeitdichtheit realisiert werden können.

**Patentansprüche**

1. Abdichtungssystem mit Stopfbuchse bei Regel- oder Absperrarmaturen, bestehend aus
   - einem Ventilgehäuse (3) mit Stopfbuchsraum,
   - einer geteilten Packung mit Einzelpackungsringen aus einem Basisdichtungsmaterial und jeweils einem unteren und oberen Kammerungsring für jeden der beiden Packungsteile,
   - einer mit dem Ventilgehäuse (3) verschraubten Stopfbuchsbrille (2),
   - einer zwischen den beiden Packungsteilen im Stopfbuchsraum angeordneten Schmierbuchse (13), über die eine kontinuierliche Gleitmittelzuführung erfolgt, sowie
   - einer axial- oder auch drehbeweglichen Spindel (1) bzw. Welle,
   gekennzeichnet durch die Kombination folgender Merkmale:
   a) für die Herstellung der Packung finden Folien aus flexiblem Graphit als Halbzeug Verwendung,
   b) in die Packung ist vor dem Einbau in die Armatur ein pastöses Gleitmittel eingelagert worden und
   c) die Packungsverdichtung und -nachstellung erfolgt durch Federkraft.

2. Abdichtungssystem nach Anspruch 1, dadurch gekennzeichnet, daß die Packungsverdichtung und laufende Nachstellung der Packung beim Betrieb durch zentrisch angeordnete und axial wirkende Tellerfedernpakete erfolgt.

3. Abdichtungssystem nach Anspruch 1 oder 2, dadurch gekennzeichnet, daß als Gleitmittel Spezialfette, z. B. mit einer Zusammensetzung auf Basis Graphit, auf Basis von Bor, Stickstoff, Polytetrafluorethylen (PTFE) mit einem Feststoffanteil von etwa 30 Gew.-%, auf Bentonebasis mit mikrofeinen Kupfer- und Bleipartikeln oder auf Basis von Silikaten mit fluoriertem Polytheröl und PTFE als weiteren Bestandteilen Verwendung finden.

4. Abdichtungssystem nach mindestens einem der vorstehenden Ansprüche, dadurch gekennzeichnet, daß die Gleitmittelzuführung einen durch das Ventilgehäuse geführten Zuführkanal (14) und eine den Zuführkanal mit Gleitmittel versorgende, am Ventilgehäuse montierte Gleitmittelpresse mit das Gleitmittel aufnehmendem Zylinderraum und pneumatisch oder federbelastetem Zylinderkolben (17), mittels welchem das Gleitmittel aus dem Zylinderraum über einen Zuführstutzen (15), eine Durchgangsbohrung (14) und die Schmierbuchse (13) laufend nachgepreßt wird, aufweist.

5. Abdichtungssystem nach Anspruch 4, dadurch gekennzeichnet, daß der Zuführstutzen (15) mit einem Druckschmierkopf (16) versehen ist.

6. Abdichtungssystem nach einem der Ansprüche 4 oder 5, dadurch gekennzeichnet, daß der Druckschmierkopf (16) mit eingebautem Rückschlagventil versehen ist.

7. Packungsringe für Stopfbuchsenabdichtungssysteme bei Regel- oder Absperrarmaturen gemäß Anspruch 1, hergestellt aus Folien aus flexiblen Graphit, vorzugsweise aus zu Bandmaterial geformten Folien aus expandiertem Reingraphit, dadurch gekennzeichnet, daß in die Packung ein pastöses Gleitmittel, vorzugsweise zu 5 bis 10 Gew.-%, inkorporiert ist.

8. Packungsringe nach Anspruch 7, dadurch gekennzeichnet, daß als Gleitmittel Spezialfette auf Basis von
   - Graphit,
   - Bor, Stickstoff und PTFE, mit einem Feststoffanteil von etwa 30 Gew.-%
   - Bentone mit mikrofeinen Kupfer- und Bleipartikeln oder
   - Silikaten mit fluoriertem Polyetheröl und PTFE
   enthalten sind.

9. Packungsringe nach einem der Ansprüche 7 oder 8, dadurch gekennzeichnet, daß sie bereits außerhalb des Packungsraumes in Form einer Packungshülse, ggf. mit integralem Kammerungsring, zusammengefügt sind.

## Claims

1. A sealing system with a stuffing box in control or shut-off fittings, consisting of
   - a valve housing (3) having a stuffing box chamber,
   - a divided packing with individual packing rings made from a base sealing material and a lower and upper dividing ring respectively for each of the two packing parts,
   - a gland (2) screwed to the valve housing (3),
   - a grease box (13) disposed between the two packing parts in the stuffing box chamber, via which a continuous supply of lubricant is ensured, and also
   - an axially mobile or even rotating spindle (1) or shaft,

   **characterised by** a combination of the following features:
   a) sheets made from flexible graphite as a semi-finished products are used for the production of the packing
   b) a pasty lubricant was put into the packing before its installation into the fitting,
   c) the packing compaction and adjustment is achieved by spring resistance.

2. A sealing system according to Claim 1,
   **characterised in that** the compacting and routine adjustment of the packing occurs during operation by centrally disposed and axially acting packets of disc springs.

3. A sealing system according to Claim 1 or 2,
   **characterised in that** special fats are used as lubricants, e.g. with a composition on a graphite base, on a base of boron, nitrogen, polytetrafluoroethylene (PTFE) having a solids content of roughly 30 % by weight, on a bentone base with micro-fine copper and lead particles or on a base of silicates with fluorinated polyether oil and PTFE as further constituents.

4. A sealing system according to at least one of the preceding Claims,
   **characterised in that** the supply of lubricant comprises a supply duct (14) guided through the valve housing and a lubricant press supplying the supply duct with lubricant and mounted at the valve housing, having a cylinder chamber containing the lubricant and a pneumatically or spring-loaded cylinder plunger (17), by means of which the lubricant is continuously forced out of the cylinder chamber via a supply connection (15), a through bore (14) and the grease box (13).

5. A sealing system according to Claim 4,
   **characterised in that** the supply connection (15) is provided with a pressure grease fitting (16).

6. A sealing system according to one of Claims 4 or 5,
   **characterised in that** the pressure grease fitting (16) is provided with an integrated check valve.

7. Packing rings for stuffing box sealing systems in control or shut-off fittings as specified in Claim 1, manufactured from sheets made from flexible graphite, preferably from sheets made from expanded pure graphite formed to produce strip material,
   **characterised in that** a pasty lubricant, preferably 5 to 10 % by weight, is incorporated in the packing.

8. Packing rings according to Claim 7,
   **characterised in that** special fats on a base of
   - graphite,
   - boron, nitrogen and PTFE, having a solids content of roughly 30 % by weight,
   - bentone having micro-fine copper and lead particles or
   - silicates with fluorinated polyether oil and PTFE
   are provided as lubricants.

9. Packing rings according to one of Claims 7 or 8,
   **characterised in that** they are already assembled outside the packing chamber in the form of a packing sleeve, if necessary with an integral dividing ring.

## Revendications

1. Système d'étanchéité à presse étoupe pour robinetterie et vannes constitué de :
   - un carter de vanne (3) avec chambre de presse étoupe,
   - un garnissage divisé avec des bagues individuelles de garnissage en matériau d'étanchéité de base et chaque fois une bague de compartimentation supérieure et inférieure pour chacune des deux pièces de garnissage,
   - un fouloir (2) de presse étoupe fixé au carter de vanne (3),
   - une douille de graissage (13) placée entre les deux pièces de garnissage dans la chambre de presse étoupe, grâce à laquelle on réalise un apport continu de lubrifiant, ainsi que,

- une tige (1) mobile axialement ou en rotation ou un arbre.

caractérisé par la combinaison des caractéristiques suivantes :

a) pour la production du garnissage on utilise des films en graphite souple comme demi-produit,

b) dans le garnissage avant le montage dans le robinet on intercale un lubrifiant pâteux et

c) l'étanchéité du garnissage et le réglage sont réalisés sous l'effet d'une force de ressort.

2. Système d'étanchéité selon la revendication 1, caractérisé en ce qu'on réalise la densification et le réglage permanent du garnissage en service par des ensembles de rondelles Belleville en disposition centrée et à effet axial.

3. Système d'étanchéité selon la revendication 1 ou 2, caractérisé en ce qu'on utilise comme lubrifiant des graisses spéciales, par exemple avec une composition à base de graphite, à base de bore, d'azote, de polytétrafluoroéthylène (PTFE) avec une teneur en solide d'environ 30 % en poids, à base de bentonite avec des particules microfines de cuivre et de plomb, ou à base de silicates avec de l'huile de polyéther fluoré et du PTFE comme autre composant.

4. Système d'étanchéité selon au moins l'une des revendications précédentes, caractérisé en ce que l'introduction de lubrifiant présente un canal d'alimentation (14) ménagé dans le carter de vanne et une presse à lubrifiant montée sur le carter de vanne, alimentant le canal d'alimentaiton en lubrifiant avec la chambre de cylindre accueillant le lubrifiant et un piston de cylindre (17) chargé pneumatiquement ou par un ressort, au moyen duquel le lubrifiant est comprimé en permanence et sort de la chambre de cylindre par une tubulure d'arrivée (15) par un alésage de passage (14) et la douille de graissage (13).

5. Système d'étanchéité selon la revendication 4, caractérisé en ce que la tubulure d'arrivée (15) est munie d'un téton de graissage sous pression (16).

6. Système d'étanchéité selon l'une des revendications 4 ou 5, caractérisé en ce que le téton de graissage sous pression (16) est muni d'un clapet de non retour incorporé.

7. Bagues de garnissage de systèmes d'étanchéité à presse étoupe pour robinetteries et vannes selon la revendication 1, réalisées en films de graphite souple de préférence en films formés en matériau en bande de graphite pur expansé, caractérisées en ce qu'on incorpore au garnissage un lubrifiant pâteux, de préférence de 5 à 10 % en poids.

8. Bagues de garnissage selon la revendication 7, caractérisées en ce qu'on utilise comme lubrifiant des graisses spéciales à base de :

- graphite,
- bore, azote et PTFE, avec une teneur en solide d'environ 30 % en poids,
- bentonite avec des particules microfines de cuivre et de plomb ou
- silicates avec de l'huile de polyéther fluorée et du PTFE.

9. Bagues de garnissage selon l'une des revendications 7 ou 8, caractérisés en ce qu'on les assemble déjà hors de la chambre de garnissage sous forme d'une douille de garnissage le cas échéant avec une bague de compartimentation intégrée.

Fig. 1

Fig. 2

Fig. 3